# EUROPEAN PATENT SPECIFICATION

(11) **EP 2 640 765 B1**
(45) Date of publication and mention of the grant of the patent: **04.01.2017**
(21) Application number: 11802984.2
(22) Date of filing: 18.11.2011
(51) Int. Cl.: C08G 59/50, C08G 59/56, C08G 59/62

(54) **ONE COMPONENT EPOXY RESIN COMPOSITION**
EINKOMPONENTEN EPOXIDHARZZUSAMMENSETZUNG
COMPOSITION DE RÉSINE ÉPOXY À UN COMPOSANT

(30) Priority: 19.11.2010 JP 2010259088
(43) Date of publication of application: 25.09.2013
(73) Proprietor: Henkel IP & Holding GmbH, 40589 Düsseldorf (DE)
(72) Inventor: CHEN, Chunfu, Kawasaki-shi Kanagawa 211-0067 (JP)
(74) Representative: Henkel IP Department
(86) International application number: PCT/JP2011/077276
(87) International publication number: WO 2012/067270

(56) References cited:
- WO-A1-2006/022693
- JP-A- 2004 027 159
- US-B1- 7 034 404

## Description

### Technical Field

The present invention relates to a one component epoxy resin composition, and particularly to a one component epoxy resin composition using a latent curing agent.

### Background Art

An epoxy resin has been used in a wide range of application such as coating materials, electric and electronic insulating materials and adhesive agents since its cured products have excellent performance in point of a mechanical property, an electrical property, a thermal property, chemical resistance and an adhesion property. Particularly in recent years, a one component epoxy resin composition which is excellent in a curing property and storage stability has been required in order to improve the productivity in electronic material application.

Many one component epoxy resin compositions have been hitherto proposed. As an example of the one component epoxy resin composition, there is a one component epoxy resin composition in which a latent curing agent such as dicyandiamide, a BF₃-amine complex, an amine salt or a modified imidazole compound is used as a curing agent. For example, in Patent Document 1, there are described a latent curing agent prepared by microcapsulating an amine compound and a one component epoxy resin composition containing the latent curing agent as a curing agent.

However, in the conventional latent curing agents, those having excellent storage stability have a low curing property and require high temperature or a long time for curing. For example, a one component epoxy resin composition, in which dicyandiamide is mixed, has storage stability of six months or more in the case of storing it at ambient temperature, but it requires a curing temperature of 170°C or higher.

Further, in Patent Document 2, there is described a one component epoxy resin composition in which a liquid phenol resin is predominantly used as a curing agent and a latent curing agent is used in combination with the curing agent. This one component epoxy resin composition achieves a high curing property and excellent storage stability simultaneously. However, in the case of using a liquid phenol resin predominantly as a curing agent, the physical strength of a resin obtained by curing the composition, that is, a cured resin can be insufficient as compared with the case of using the latent curing agent predominantly. Patent Documents

Patent Document 1: Japanese Patent Laid-Open Publication No. 2010-53353
Patent Document 2: Japanese Patent Laid-Open Publication No. 2004-27159

### Summary of Invention

The present invention has been made to solve the above problems, and it is an object of the present invention to provide a one component epoxy resin composition having a high curing property, wherein a cured resin thereof exhibits a physical strength equal to that in the case where a latent curing agent is predominantly used.

The present invention provides a one component epoxy resin composition comprising:
(a) 100 parts by weight of liquid epoxy resin;
(b) a latent curing agent in an amount of 10 to 35 parts by weight, wherein the latent curing agent comprises at least one selected from the group consisting of an amine compound, an imidazole compound and their adducts;
(c) liquid phenol resin in an amount of 0.1 to 25 parts by weight,
(d) at least one organic acid or at least one boric acid ester as a stabilizing agent.

In one embodiment, the liquid phenol resin is comprised in an amount of 0.1 to 25 parts by weight.

In one embodiment, the liquid epoxy resin comprises at least one selected from the group consisting of a bisphenol A type epoxy resin, a bisphenol F type epoxy resin, catechol and resorcinol.

In one embodiment, the latent curing agent comprises at least one selected from the group consisting of an amine compound, an imidazole compound and their adducts.

In one embodiment, the liquid phenol resin comprises a phenol novolac resin represented by the formula: 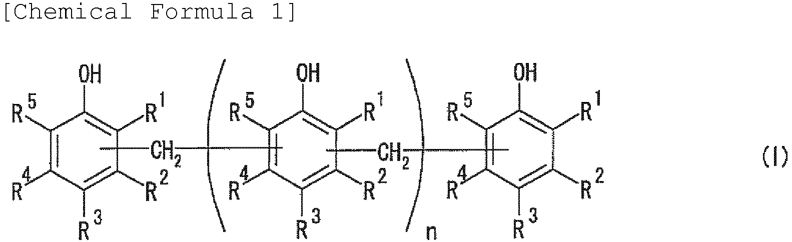 wherein, R¹ to R⁵ each independently represents H, alkyl group having 1 to 3 carbon atoms or allyl group, and n represents an integer of 0 to 3. Each of R¹ to R⁵ may represent different meanings on different benzene ring.

In one embodiment, the one component epoxy resin composition further comprises at least one selected from the group consisting of barbituric acid and boric acid esters as a stabilizing agent.

The one component epoxy resin composition of the present invention has a high curing property and a cured resin thereof exhibits a physical strength equal to that in the case where a latent curing agent is predominantly used. Description of Embodiments

The liquid epoxy resin of the above-mentioned component (a) is liquid at room temperature, or at 25°C. The liquid epoxy resin may be composed of one class of epoxy resin, or may be a mixture of two or more classes of epoxy resins.

Examples of the class of the liquid epoxy resin include a bisphenol A type epoxy resin, a bisphenol F type epoxy resin, an alicyclic epoxy resin, an allylbisphenol type epoxy resin and mixtures thereof. However, a solid epoxy resin may be used in combination with the liquid epoxy resin as required if the component (a) becomes liquid as the resulting mixture.

Specific examples of the liquid epoxy resin include EPOTOHTO YDF-8170 (epoxy equivalent 158 g/eq) manufactured by Tohto Kasei Co., Ltd. as the bisphenol F type epoxy resin, DER-332 (epoxy equivalent 170 g/eq) manufactured by The Dow Chemical Company, and YL 980 and YL 983U (epoxy equivalent 170 g/eq) manufactured by JAPAN EPOXY RESINS Co., Ltd as the bisphenol A type epoxy resin; and CELLOXIDE 2021 (epoxy equivalent 135 g/eq) manufactured by DAICEL CHEMICAL INDUSTRIES, Ltd. as the alicyclic epoxy resin.

As the latent curing agent of the component (b), one or more classes of the latent curing agents can be selected from commonly commercially available latent curing agents and used. Particularly, amine-based latent curing agents are preferred, and examples of the amine-based latent curing agents include heretofore known amine compounds having a latent property, and modified amines such as amine adducts. The modified amines include a core-shell type curing agent in which the surface of a core of an amine compound (or amine adducts) is surrounded with a shell of a modified product (the surface converted to adduct) of amine, and a master batch type curing agent in which the core-shell type curing agent is in a state of being mixed with an epoxy resin.

Examples of the amine compounds having a latent property include aromatic primary amines such as diaminodiphenylmethane and diaminodiphenylsulfone; imidazoles such as 2-heptadecylimidazole, 1-cyanoethyl-2-undecylimidazolium trimellitate, 2,4-diamino-6-[2-methylimidazolyl-(1)]-ethyl-S-triazine, 1-dodecyl-2-methyl-3-benzylimidazolium chloride, 2-phenylimidazolium isocyanurate and 2-phenyl-4-methyl-5-hydroxymethylimidazole; boron trifluoride-amine complex; dicyandiamide derivatives such as dicyandiamide, o-tolylbiguanide and α-2,5-methylbiguanide;
organic acid hydrazides such as succinic acid dihydrazide and adipic acid dihydrazide;
diaminomaleonitrile and derivatives thereof; and melamine derivatives such as melamine and diallylmelamine.

Generally, the latent curing agent refers to a powdery solid one.

Amine adducts are the reaction products of an amine compound with an epoxy compound, an isocyanate compound and/or a urea compound.

The amine compound used for producing amine adducts may be a compound which has one or more active hydrogens capable of addition reaction with an epoxy group, an isocyanate group or a urea compound, in a molecule, and has at least one substituent selected from a primary amino group, a secondary amino group or a tertiary amino group in a molecule. Examples of such amine compounds include amine compounds such as diethylenetriamine, triethylenetetramine, n-propylamine, 2-hydroxyethylaminopropylamine, cyclohexylamine, dimethylaminopropylamine, dibutylaminopropylamine, dimethylaminoethylamine, diethylaminoethylamine and N-methyl piperazine; primary or secondary amines comprising a tertiary amino group in a molecule, including imidazole compounds such as 2-methylimidazole, 2-ethylimidazole, 2-ethyl-4-methylimidazole and 2-phenylimidazole; alcohols, phenols, thiols, carboxylic acids and hydrazides, which comprise a tertiary amino group in a molecule, such as 2-dimethylaminoethanol, 1-methyl-2-dimethylaminoethanol, 1-phenoxymethyl-2-dimethylaminoethanol, 2-diethylaminoethanol, 1-butoxymethyl-2-dimethylaminoethanol, 1-(2-hydroxy-3-phenoxypropyl)-2-methylimidazole, 1-(2-hydroxy-3-phenoxypropyl)-2-ethyl-4-methylimidazole, 1-(2-hydroxy-3-butoxypropyl)-2-methylimidazole, 1-(2-hydroxy-3-butoxypropyl)-2-ethyl-4-methylimidazole, 1-(2-hydroxy-3-phenoxypropyl)-2-phenylimidazoline, 1-(2-hydroxy-3-botoxypropyl)-2-phenylimidazoline, 2-(dimethylaminomethyl)phenol, 2,4,6-tris(dimethylaminomethyl)phenol, N-β-hydroxyethylmorpholine, 2-dimethylaminoethanethiol, 2-mercaptopyridine, 2-mercaptobenzoimidazole, 2-mercaptobenzothiazole, 4-mercaptopyridine, N,N-dimethylaminobenzoic acid, N,N-dimethylglycine, nicotinic acid, isonicotinic acid, picolinic acid, N,N-dimethylglycine hydrazide, N,N-dimethylpropionic acid hydrazide, nicotinic acid hydrazide and isonicotinic acid hydrazide.

Further, examples of the epoxy compound which is used as a raw material for producing amine adducts include polyglycidyl ethers obtained by the reaction of polyhydric phenol such as bisphenol A, bisphenol F, catechol and resorcinol, or polyhydric alcohol such as glycerin and polyethylene glycol, with epichlorohydrin; glycidyl ether esters obtained by the reaction of hydroxycarboxylic acid such as p-hydroxybenzoic acid and β-hydroxynaphthoic acid with epichlorohydrin; polyglycidyl esters obtained by the reaction of polycarboxylic acid such as phthalic acid and terephthalic acid with epichlorohydrin; glycidyl amine compounds obtained from 4,4'-diaminodiphenylmethane and m-aminophenol; polyfunctional epoxy compounds such as epoxidized phenol novolac resin, epoxidized cresol novolac resin and epoxidized polyolefin; and monofunctional epoxy compounds such as butyl glycidyl ether, phenyl glycidyl ether and glycidyl methacrylate.

As the isocyanate compound which is used as a raw material for producing amine adducts, monofunctional isocyanate compounds such as n-butyl isocyanate, isopropyl isocyanate, phenyl isocyanate and benzyl isocyanate; polyfunctional isocyanate compounds such as hexamethylene diisocyanate, tolylene diisocyanate, 1,5-naphthalene diisocyanate, diphenylmethane-4,4'-diisocyanate, isophorone diisocyanate, xylylene diisocyanate, p-phenylene diisocyanate, 1,3,6-hexamethylene triisocyanate and bicycloheptane triisocyanate; and compounds containing an isocyanate group at their ends, which are obtained by the reaction of the above polyfunctional isocyanate compounds with active hydrogen compounds, can be used, and examples of such compounds include addition reaction products having an isocyanate group at their ends which are obtained by the reaction of tolylene diisocyanate with trimethylolpropane.

Example of the urea compound, which is used as a raw material for producing amine adducts, include urea, urea phosphate, urea oxalate, urea acetate, diacetyl urea, dibenzoylurea, and trimethylurea.

Typical examples of commercially available amine adducts include amine-epoxy adducts such as "ADEKA HARDENER H-3613S" (trade name of Asahi Denka Co., Ltd.), "ADEKA HARDENER H-3293S" (trade name of Asahi Denka Co., Ltd.), "AMICURE PN-23" (trade name of Ajinomoto Co., Inc.), "AMICURE MY-24" (trade name of Ajinomoto Co., Inc.), "CUREDUCT P-0505" (trade name of SHIKOKU CHEMICALS Corporation); urea type adducts such as "FUJICURE FXE-1000" (trade name of Fuji Kasei Kogyo Co., Ltd.), and "FUJICURE FXR-1036" (trade name of Fuji Kasei Kogyo Co., Ltd.).

Further, the core-shell type curing agent is obtained by further treating the surface of an amine compound (or amine adducts) with acid compounds such as a carboxylic acid compound and a sulfonic acid compound, isocyanate compounds or epoxy compounds to form a shell of a modified product (adducts, etc.) onto the surface. Further, the master batch type curing agent is the core-shell type curing agent in a state of being mixed with an epoxy resin.

Examples of commercially available master batch type curing agents include "Novacure HX-3722" (trade name of Asahi Kasei Epoxy Co., Ltd.), "Novacure HX-3742" (trade name of Asahi Kasei Epoxy Co., Ltd.), "Novacure HX-3613" (trade name of Asahi Kasei Epoxy Co., Ltd.), and the like.

The liquid phenol resin of the above-mentioned component (c) is liquid at room temperature, i.e., at 25°C. The liquid phenol resin may be composed of one class of phenol resin, or may be a mixture of two or more classes of phenol resins.

Examples of a class of the liquid phenol resin include an allylated phenol novolac resin, diallylated bisphenol A, acetylated phenol, diallylated bisphenol F, and mixtures thereof which are liquid at 25°C. The hydroxyl equivalent of the liquid phenol resin is usually 80 to 200 g/eq.

Further, a phenol novolac resin represented by the above formula (I) is also preferable as the liquid epoxy resin.

In the formula (I), R¹ to R⁵ each independently represents H, alkyl group having 1 to 5 carbon atoms or allyl group, and n represents an integer of 0 or more. Each of R¹ to R⁵ may represent different meanings on different benzene ring. For example, R³ on the leftmost benzene ring may be H and R³ on the rightmost benzene ring may be an allyl group. The liquid phenol resin is preferably an allylated phenol novolac resin in which at least one of R¹ to R⁵ represents an allyl group on at least one benzene ring.

A more preferred liquid phenol resin is a phenol novolac resin represented by the formula (I) in which R¹ to R⁵ is each independently H, alkyl group having 1 to 3 (preferably 1 or 2) carbon atoms or allyl group, and n is an integer of 0 to 3.

The most preferred liquid phenol resin is a phenol novolac resin represented by the formula (I) in which R¹ to R⁵ is each independently H or allyl group, and n is an integer of 0 to 3, and which has the allyl group at least on a part of benzene rings. As such allylated phenol novolac resins, MEH 8000 (hydroxyl equivalent 141g/eq), MEH 8005 (hydroxyl equivalent 135g/eq), MEH 8010 (hydroxyl equivalent 130 g/eq), and MEH 8015 (hydroxyl equivalent 134 g/eq), which are manufactured by Meiwa Plastic Industries, Ltd., are known.

The one component epoxy resin composition of the present invention is obtained by mixing the components (a) to (c), and publicly known functional components, if required, such as a stabilizing agent, a dilution agent and a filler in appropriate amounts. Mixing of the components may be carried out at room temperature, or may be carried out at a temperature heated to a curing temperature or lower. As a mixing device, a kneader or a blender may be used.

Next, the contents of the components (a) to (c) in the one component epoxy resin composition will be described. The content of the component (b) is an amount suitable for curing the component (a). The curing of the component (a) means that the component (a) is cured in such a way that the physical strength of the cured resin is above the level required of an intended application. In this case, it may be thought that the preferable physical strength of the cured resin is about equal to that in the case where a latent curing agent is predominantly used.

The content of the component (c) is 0.1 to 25 parts by weight with respect to 100 parts by weight of the component (a). When the content of the component (c) is out of the above-mentioned range, the curing property of the one component epoxy resin composition is deteriorated.

The one component epoxy resin composition of the present invention may contain components other than the components (a) to (c). For example when a long pot life at room temperature is preferable from the viewpoint of workability and a storage property, an organic acid is included in the one component epoxy resin composition of the present invention as a stabilizing agent.

As the organic acid, an acid having acidity higher than that of the liquid phenol resin, the component (c), is preferred. That is, it is preferred that the pKa value of the organic acid is smaller than the pKa value of the liquid phenol resin. In addition, the "acidity" means acidity in the composition and does not mean acidity in water.

Specific examples of the organic acid include (meth)acrylic acids; dibasic acids having a saturated hydrocarbon chain having about 1 to 20 carbon atoms such as succinic acid and adipic acid; dibasic acids having an unsaturated hydrocarbon chain having about 1 to 20 carbon atoms such as fumaric acid, succinic acid, citraconic acid and mesaconic acid; cyclic compounds having an acidic amide group such as barbituric acid and cyanuric acid; and aromatic carboxylic acids such as cinnamic acid, dihydroxycinnamic acid: 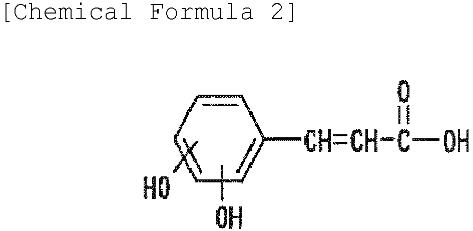 benzoic acid, salicylic acid, pamoic acid: 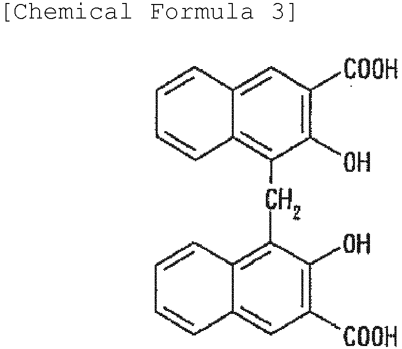 and Trolox ((±)-6-hydroxy-2,5,7,8-tetramethylchromane-2-carboxylic acid):

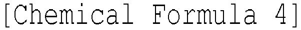

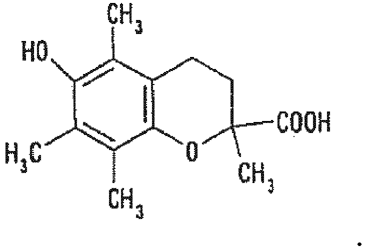

Among these, barbituric acid, fumaric acid, and Trolox are preferable and barbituric acid is most preferred.

The contents of the organic acid in the one component epoxy resin composition is 8 parts by weight or less, preferably 0.05 to 5 parts by weight, and particularly preferably 0.1 to 3 parts by weight with respect to 100 parts by weight of the component (a). When the content of the organic acid is more than 8 parts by weight, the curing property of the one component epoxy resin composition is deteriorated.

The one component epoxy resin composition of the present invention may additionally contain a publicly known dilution agent. Compounds having an epoxy group, vinyl ethers, oxetane compounds, and polyols can be appropriately used as a dilution agent. In addition, the compounds having an epoxy group are assumed to be contained in the component (a).

Specific examples of such dilution agents include aliphatic alkyl-monoglycidyl or diglycidyl ethers such as cyclohexanedimethanol diglycidyl ether, butyl glycidyl ether, 2-ethylhexyl glycidyl ether and allyl glycidyl ether; alkyl glycidyl esters such as glycidyl methacrylate and tertiary carboxylic acid glycidyl ester; styrene oxide; aromatic alkyl monoglycidyl ethers such as phenyl glycidyl ether, cresyl glycidyl ether, p-s-butylphenyl glycidyl ether and nonylphenyl glycidyl ether; tetrahydrofurfuryl alcohol glycidyl ether; monofunctional or polyfunctional vinyl ethers such as cyclohexanedimethanol divinyl ether, triethyleneglycol divinyl ether and hydroxybutyl divinyl ether; polyols represented by the general formula H-(OCH₂CH₂)ₙ-OH (n is an integer of 1 or more and generally about 2 to 20); and the oxetane compound represented by the following formula.

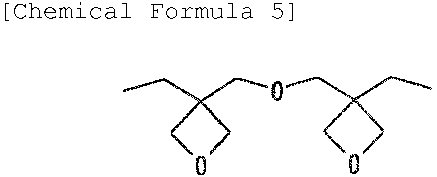

The dilution agent is an optional component and the content thereof (excluding compounds having an epoxy group) is 0 to 40% by weight and preferably 0 to 20% by weight with respect to the whole amount of a liquid thermosetting resin composition.

Further, in the present invention, it is possible to contain other fillers such as silica and alumina as an optional component as required. Generally, the filler is mixed so as to be 300 parts by weight or less with respect to 100 parts by weight of the resin components including the components (a) to (d), and a dilution agent if existing.

The composition of the present invention may further contain a silane coupling agent, a coloring agent, a surfactant, a storage stabilizing agent, a plasticizer, a lubricant, an antifoaming agent, and a levelling agent as required.

The silane coupling agent is not particularly limited, and examples thereof include γ-aminopropyltrimethoxysilane, γ-aminopropyltriethoxysilane, γ-mercaptopropyltrimethoxysilane, γ-methacryloxypropyltrimethoxysilane, γ-glycidoxypropyltrimethoxysilane, SH 6062, SZ 6030 (each produced by Dow Corning Toray Silicone Co., Ltd.), and KBE 903, KBM 803 (each produced by Shin-Etsu Shilicone Co.,

Ltd.).

The one component epoxy resin composition of the present invention is cured in a short time at relatively low curing temperature. In a preferred embodiment, the curing temperature of the one component epoxy resin composition is, for example, about 70°C or higher, and more preferably about 75°C or higher. A curing time depends on the curing temperature, and the curing time is within about 60 minutes and preferably within about 45 minutes, for example when the curing temperature is about 75°C. The curing time is within about 20 minutes and preferably within about 10 minutes when the curing temperature is about 100°C.

The viscosity of the one component epoxy resin composition of the present invention can be decreased, and the one component epoxy resin composition is superior in workability, has a long pot life and is superior in a storage property.

Therefore, the one component epoxy resin composition of the present invention can be used for wide applications such as sealing agents of a semiconductor and glass bonding applications such as sealing agents for displays of EL devices.

### Examples

Hereinafter, the present invention will be described in more detail by way of examples, but the present invention is not limited to these examples. In addition, units such as part(s) and %, representing quantities, are on a weight basis in examples, unless otherwise specified.

### Example 1

A bisphenol A type epoxy resin ("RE-310S" manufactured by Nippon Kayaku Co., Ltd., liquid at 25°C (viscosity 13000 to 17000 mPa•s), epoxy equivalent 175 to 190 g/eq), a composition containing a latent curing agent ("Novacure HX-3722" manufactured by Asahi Kasei Corporation), an allylated phenol novolac resin ("MEH 8000H" manufactured by Meiwa Plastic Industries, Ltd., liquid at 25°C (viscosity 2000 ± 1000 mPa•s), hydroxyl equivalent 141± 2 g/eq), a silane coupling agent (γ-glycidoxypropyltrimethoxysilane), and an organic acid (barbituric acid) were prepared and these materials were uniformly mixed according to the mixing ratios shown in Table 1 to prepare a one component epoxy resin composition.

The "Novacure HX-3722" manufactured by Asahi Kasei Corporation is a composition containing a latent curing agent. The amount of the latent curing agent contained in "Novacure HX-3722" is 30 to 40% by weight.

Next, performances of the obtained curable resin compositions were evaluated in the following manner. The results of evaluations are shown in Table 1

### Viscosity

The viscosity was measure by use of a viscometer, PK 100 (cones 1, 2) manufactured by HAAKE AG.

### Pot Life

The time elapsed before the viscosity increased by a factor of 2 was employed as a pot life.

### Modulus

The modulus was measured by use of a DMA method.

### Glass Transition Temperature (Tg)

The glass transition temperature was measured by use of a DMA method.

### Adhesive Strength

The one component epoxy resin composition was applied onto a glass-epoxy substrate, and the substrate was cured at 100°C. Then, the tensile shearing strength of the cured resin was measured.

### Example 2

A curable resin composition was prepared in the same manner as in Example 1 except that the amount of each material used was changed to the value shown in Table 1, and its performance was evaluated. The results of evaluations are shown in Table 1.

### Example 3

A curable resin composition was prepared in the same manner as in Example 1 except that 0.4 parts of triethyl borate was used in place of barbituric acid and the amount of each material used was changed to the value shown in Table 1, and its performance was evaluated. The results of evaluations are shown in Table 1.

### Comparative Example 4

A curable resin composition was prepared in the same manner as in Example 1 except that barbituric acid was not used and the amount of each material used was changed to the value shown in Table 1, and its performance was evaluated. The results of evaluations are shown in Table 1.

### Example 5

A curable resin composition was prepared in the same manner as in Example 1 except that the amount of each material used was changed to the value shown in Table 1, and its performance was evaluated. The results of evaluations are shown in Table 1.

### Comparative Example 1

A curable resin composition was prepared in the same manner as in Example 1 except that an allylated phenol novolac resin and barbituric acid were not used and the amount of each material used was changed to the value shown in Table 1, and its performance was evaluated. The results of evaluations are shown in Table 1.

When the liquid phenol resin was not used as the curing agent for the epoxy resin and the latent curing agent was used, this case required a long curing time.

### Comparative Example 2

A curable resin composition was prepared in the same manner as in Example 1 except that the amount of each material used was changed to the value shown in Table 1, and its performance was evaluated. The results of evaluations are shown in Table 1.

When the liquid phenol resin was predominantly used as the curing agent for the epoxy resin and the amount of the latent curing agent used was small, the modulus and the Tg of the cured resin were deteriorated.

**[Table 1]**

| | Examples | | | | | Comparative Examples | |
|---|---|---|---|---|---|---|---|
| Composition | 1 | 2 | 3 | Comp.4 | 5 | 1 | 2 |
| Liquid epoxy resin ¹⁾ (parts by weight) | 48.5 (100) | 48.5 (100) | 48.6 (100) | 49.0 (100) | 48.5 (100) | 49.0 (100) | 48.5 (100) |
| Silane coupling agent | 1.0 | 1.0 | 1.0 | 1.0 | 1.0 | 1.0 | 1.0 |
| Liquid phenol resin ²⁾ (parts by weight) | 2.0 (4.1) | 5.0 (10.3) | 5.0 (10.2) | 5.0 (10.2) | 10.0 (20.6) | | 40.0 (82.4) |
| Composition containing latent curing agent ³⁾ | 48.0 | 45.0 | 45.0 | 45.0 | 40.0 | 50.0 | 10.0 |
| Barbituric acid | 0.5 | 0.5 | | | 0.5 | | 0.5 |
| Triethyl borate | | | 0.4 | | | | |
| Viscosity (mPas/25°C) | 24700 | 21900 | 25500 | 27000 | 25600 | 27200 | 15100 |
| Pot life (days) | >14 | >14 | >14 | 7 | >14 | >14 | >14 |
| Curing Time (minutes @ 100°C) | | | | | | | |
| Conversion rate 50% | 4.18 | 4.20 | 4.48 | 4.17 | 5.22 | 4.90 | 14.3 |
| Conversion rate 90% | 5.99 | 5.68 | 6.22 | 5.92 | 6.81 | 9.14 | 37.1 |
| Conversion rate 95% | 6.53 | 6.07 | 6.92 | 6.91 | 7.74 | 11.0 | 46.2 |
| Conversion rate 99% | 7.38 | 6.75 | 8.72 | 10.9 | 11.7 | 16.1 | 64.4 |
| Modulus (GPa) | 3.41 | 3.25 | 3.32 | 3.49 | 3.36 | 3.42 | 2.73 |
| Tg (°C), DMA | 154 | 151 | 152 | 152 | 146 | 159 | 81 |
| Adhesive strength (N/mm²) | 14.0 | 13.9 | 14.1 | 13.8 | 13.6 | 13.2 | 14.5 |

| | | | | | | | |
|---|---|---|---|---|---|---|---|
| 1) "RE-310S" manufactured by Nippon Kayaku Co., Ltd. 2) "MEH 8000H" manufactured by Meiwa Plastic Industries, Ltd. 3) "Novacure HX-3722" manufactured by Asahi Kasei Corporation | | | | | | | |

## Claims

1. A one component epoxy resin composition comprising:
(a) 100 parts by weight of liquid epoxy resin;
(b) a latent curing agent in an amount of 10 to 35 parts by
weight, wherein the latent curing agent comprises at
least one selected from the group consisting of an amine
compound, an imidazole compound and their adducts;
(c) liquid phenol resin in an amount of 0.1 to 25 parts by
weight,
(d) at least one organic acid or at least one boric acid
ester as a stabilizing agent.

2. The one component epoxy resin composition according to claim 1, wherein the liquid epoxy resin comprises at least one selected from the group consisting of a bisphenol A type epoxy resin, a bisphenol F type epoxy resin, catechol and resorcinol.

3. The one component epoxy resin composition according to any one of claims 1 to 2, wherein the liquid phenol resin comprises a phenol novolac resin represented by the formula: 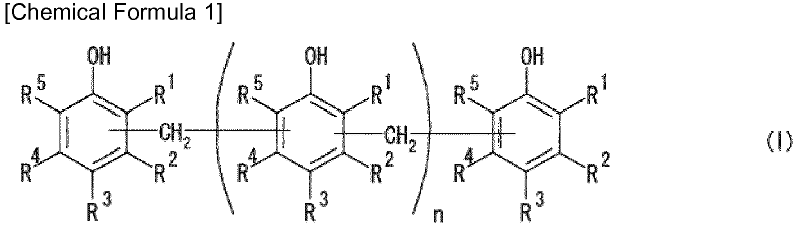 wherein, R¹ to R⁵ each independently represents H, alkyl group having 1 to 3 carbon atoms or allyl group, and n represents an integer of 0 to 3. Each of R¹ to R⁵ may represent different meanings on different benzene ring.

4. The one component epoxy resin composition according to any one of claims 1 to 3, wherein the one component epoxy resin composition comprises at least one selected from the group consisting of barbituric acid and boric acid esters as a stabilizing agent.

5. The use of the one component epoxy resin composition according to any one of claims 1 to 4 as a sealing agent of a semiconductor or for glass bonding applications, preferably as sealing agents for displays of EL devices.

## Patentansprüche

1. Einkomponenten-Epoxidharzzusammensetzung, Folgendes umfassend:
(a) 100 Gewichtsanteile flüssiges Epoxidharz;
(b) ein latentes Härtungsmittel in einer Menge von 10 bis 35 Gewichtsanteilen, wobei das latente Härtungsmittel wenigstens ein ausgewähltes Element der Gruppe umfasst, die aus einer Aminverbindung, einer Imidazolverbindung und deren Addukten besteht;
(c) flüssiges Phenolharz in einer Menge von 0,1 bis 25 Gewichtsanteilen,
(d) wenigstens eine organische Säure oder wenigstens einen Borsäureester als ein stabilisierendes Mittel.

2. Einkomponenten-Epoxidharzzusammensetzung nach Anspruch 1, wobei das flüssige Epoxidharz wenigstens ein ausgewähltes Element aus der Gruppe umfasst, die aus einem Bisphenol-A-Typ-Epoxidharz, einem Bisphenol-F-Typ-Epoxidharz, Catechol und Resorcinol besteht.

3. Einkomponenten-Epoxidharzzusammensetzung nach einem der Ansprüche 1 bis 2, wobei das flüssige Phenolharz ein Phenol-Novolac-Harz umfasst, das durch die folgende Formel dargestellt wird: 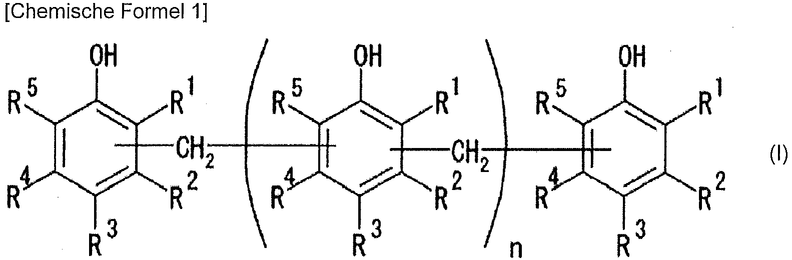 wobei, R¹ bis R⁵ jeweils unabhängig Folgendes darstellen: H, eine Alkylgruppe mit 1 bis 3 Kohlenstoffatomen oder eine Allylgruppe, und n eine Ganzzahl von 0 bis 3 darstellt. Jeder von R¹ bis R⁵ stellt möglicherweise verschiedene Bedeutungen in verschiedenen Benzolringen dar.

4. Einkomponenten-Epoxidharzzusammensetzung nach einem der Ansprüche 1 bis 3, wobei die Einkomponenten-Epoxidharzzusammensetzung als ein Stabilisierungsmittel wenigstens ein ausgewähltes Element aus der Gruppe umfasst, die aus Barbitursäure- und Borsäureestern besteht.

5. Gebrauch der Einkomponenten-Epoxidharzzusammensetzung nach einem der Ansprüche 1 bis 4 als ein Dichtmittel eines Halbleiters oder für Glasverklebungsanwendungen, vorzugsweise als Dichtmittel für Anzeigen von EL-Vorrichtungen.

## Revendications

1. Composition de résine époxy mono-composante contenant :
(a) 100 parties pondérales de résine époxy liquide ;
(b) un agent de polymérisation latent à hauteur de 10 à 35 parties pondérales, l'agent de polymérisation latent contenant au moins un composant choisi dans le groupe constitué d'une amine, d'une imidazole et de leurs adduits ;
(c) une résine phénolique liquide à hauteur de 0,1 à 25 parties pondérales ;
(d) au moins un acide organique ou au moins un ester d'acide borique comme agent stabilisant.

2. Composition de résine époxy mono-composante selon la revendication 1, dans laquelle la résine époxy contient au moins un élément choisi dans le groupe constitué d'une résine époxy de type bisphénol A, d'une résine époxy de type bisphénol F, du catéchol et du résorcinol.

3. Composition de résine époxy mono-composante selon l'une quelconque des revendications 1 ou 2, dans laquelle la résine phénolique liquide comprend la résine phénolique novolac représentée par la formule : 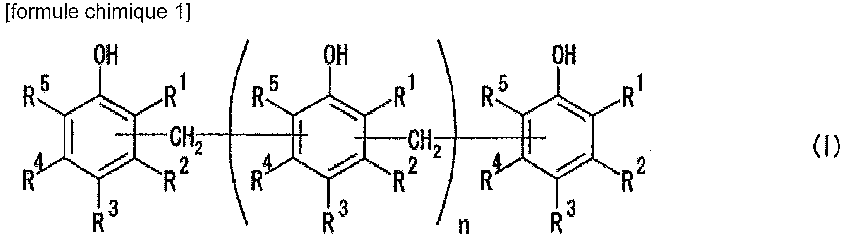 où R¹ à R⁵ représentent chacun indépendamment H, un groupe alkyle comportant 1 à 3 atomes de carbone ou un groupe allyle, et n représente un entier entre 0 et 3. Chaque R¹ à R⁵ peut avoir différentes significations sur différents cycles benzéniques.

4. Composition de résine époxy mono-composante selon l'une quelconque des revendications 1 à 3, dans laquelle la composition de résine époxy mono-composante contient au moins un dans le groupe constitué de l'acide barbiturique et des esters de l'acide borique comme agent stabilisant.

5. Utilisation d'une composition de résine époxy mono-composante selon l'une quelconque des revendications 1 à 4 comme agent d'étanchéité d'un semi-conducteur ou pour des applications de collage sur verre, de préférence comme agent d'étanchéité pour des écrans de dispositifs EL.
